(19) **Europäisches Patentamt / European Patent Office / Office européen des brevets**

(11) **EP 4 513 865 A1**

(12) **EUROPEAN PATENT APPLICATION**
published in accordance with Art. 153(4) EPC

(43) Date of publication:
26.02.2025 Bulletin 2025/09

(21) Application number: 22938132.2

(22) Date of filing: 11.07.2022

(51) International Patent Classification (IPC):
*H04N 5/00* (2011.01)

(86) International application number:
PCT/CN2022/104983

(87) International publication number:
WO 2023/201907 (26.10.2023 Gazette 2023/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.04.2022 CN 202210401678

(71) Applicant: **Shenzhen Ruishizhixin Technology Co., Ltd.**
**Shenzhen, Guangdong 518000 (CN)**

(72) Inventors:
• **ZHA, Yingyun**
  **Shenzhen Guangdong 518000 (CN)**
• **DENG, Jian**
  **Shenzhen Guangdong 518000 (CN)**

(74) Representative: **Murgitroyd & Company**
**165-169 Scotland Street**
**Glasgow G5 8PL (GB)**

(54) **EVS PIXEL WORKING METHOD AND RELATED APPARATUS**

(57) The present disclosure provides an EVS pixel operating method and a related apparatus. The method includes: recording, at a first moment, an output voltage generated by an EVS pixel in response to an incident light intensity, to obtain a first voltage; integrating the output voltage with the first voltage as a reference voltage over a predetermined integration duration after the first moment to obtain a voltage variation value; and comparing the voltage variation value with a predetermined voltage threshold range, and outputting an event signal under a condition that the voltage variation value is out of the voltage threshold range. In the implementation of the solutions of the present disclosure, a voltage variation value generated by an EVS pixel in response to a light intensity change is integrated over a specific duration, so as to amplify the voltage variation value, to more clearly indicate whether a voltage variation is a positive increase or a reverse reduction, which can effectively ensure the accuracy of outputting an event signal by an EVS vision sensor.

```
┌─────────────────────────────────────────────┐
│ Recording, at a first moment, an output      │   101
│ voltage generated by the EVS pixel in        │
│ response to an incident light intensity, to  │
│ obtain a first voltage                       │
└─────────────────────────────────────────────┘
                      │
                      ▼
┌─────────────────────────────────────────────┐
│ Integrating the output voltage with the      │   102
│ first voltage as a reference voltage over a  │
│ predetermined integration duration           │
│ after the first moment to obtain a voltage   │
│ variation value                              │
└─────────────────────────────────────────────┘
                      │
                      ▼
┌─────────────────────────────────────────────┐
│ Comparing the voltage variation value with   │   103
│ a predetermined voltage threshold range, and │
│ outputting an event signal under a           │
│ condition that the voltage variation value   │
│ is out of the voltage threshold range        │
└─────────────────────────────────────────────┘
```

**FIG. 1**

EP 4 513 865 A1

**Description**

TECHNICAL FIELD

The present disclosure relates to the field of sensor technologies, and in particular to, an EVS pixel operating method and a related apparatus.

BACKGROUND

With the sustained development of science and technology, computer vision technologies are becoming more mature. The emergence of event-based vision sensors (EVSs) has attracted increasing attention in the field of vision. The EVS mimics a human retina to respond to pixel pulses of changes in brightness due to motion so that it can capture changes in brightness in a scene at a very high frame rate, and records events at specific timing and at specific locations in an image to form a stream of events rather than a frame stream, thereby solving issues such as information redundancy, large amounts of data storage, and real-time processing in conventional cameras. However, due to noise and mismatch in circuits, current EVS vision sensors may result in limited precision of voltage variations, and therefore may lead to errors in event signal outputs.

TECHNICAL PROBLEM

Embodiments of the present disclosure provide an EVS pixel operating method and a related apparatus, which at least can solve the problem that the accuracy of outputting an event signal by an EVS vision sensor provided in the related art is poor.

SUMMARY OF THE INVENTION

A first aspect of embodiments of the present disclosure provides an EVS pixel operating method, applied to an EVS pixel, and the EVS pixel operating method includes:

recording, at a first moment, an output voltage generated by the EVS pixel in response to an incident light intensity, to obtain a first voltage;
integrating the output voltage with the first voltage as a reference voltage over a predetermined integration duration after the first moment to obtain a voltage variation value; and
comparing the voltage variation value with a predetermined voltage threshold range, and outputting an event signal under a condition that the voltage variation value is out of the voltage threshold range.

A second aspect of the embodiment of the present disclosure provides an EVS pixel, including: an input unit, a sampling unit, an integration unit, a comparison unit, and an output unit, where

the input unit is configured to generate an output voltage in response to an incident light intensity;
the sampling unit is configured to record the output voltage at a first moment as a first voltage;
the integration unit is configured to integrate the output voltage with the first voltage as a reference voltage over a predetermined integration duration after the first moment to obtain a voltage variation value;
the comparison unit is configured to compare the voltage variation value with a predetermined voltage threshold range; and
the output unit is configured to output an event signal under a condition that the voltage variation value is out of the voltage threshold range.

A third aspect of the embodiments of the present disclosure provides a terminal device, including: a memory and a processor, where the processor is configured to execute a computer program stored on the memory, and the processor, when executing the computer program, implements steps of the EVS pixel operating method provided in the first aspect of the embodiments of the present disclosure.

A fourth aspect of the embodiments of the present disclosure further provides a computer-readable storage medium having stored thereon a computer program. The computer program, when executed by a processor, implements steps of the EVS pixel operating method provided in the first aspect of the embodiments of the present disclosure.

BENEFICIAL EFFECTS

As can be seen from the above, according to the EVS pixel operating method and the related apparatus provided in the solutions of the present disclosure, the output voltage generated by the EVS pixel in response to the incident light intensity is recorded at the first moment to obtain the first voltage; the output voltage is integrated with the first voltage as the reference voltage over the predetermined integration duration after the first moment to obtain the voltage variation value; and the voltage variation value is compared with the predetermined voltage threshold range, and the event signal is output under a condition that the voltage variation value is out of the voltage threshold range. In the implementation of the solutions of the present disclosure, a voltage variation value generated by an EVS pixel in response to a light intensity change is integrated over a specific duration, so as to amplify the voltage variation value, to more clearly indicate whether a voltage variation is a positive increase or a reverse reduction, which can effectively ensure the accuracy of outputting an event signal by an EVS vision sensor.

BRIEF DESCRIPTION OF THE DRAWINGS

FIG. 1 is a basic schematic flowchart of an EVS pixel operating method according to a first embodiment of the present disclosure;
FIG. 2 is a schematic diagram of a step signal according to the first embodiment of the present disclosure;
FIG. 3 is a schematic diagram of a structure of an EVS pixel according to a second embodiment of the present disclosure;
FIG. 4 is a schematic diagram of a signal change according to the second embodiment of the present disclosure; and
FIG. 5 is a schematic diagram of a structure of a terminal device according to a third embodiment of the present disclosure.

DETAILED DESCRIPTION OF THE PREFERRED EMBODIMENTS

In order to make the invention objectives, features, and advantages of the present disclosure more apparent and easier to understand, the following clearly and completely describes the technical solutions in the embodiments of the present disclosure with reference to the accompanying drawings in the embodiments of the present disclosure. Apparently, the described implementations are some but not all of the embodiments of the present disclosure. All other embodiments obtained by those skilled in the art based on the embodiments of the present disclosure without creative efforts shall fall within the scope of protection of the present disclosure.

In the description of the embodiments of the present disclosure, it should be understood that orientation or position relationships indicated by terms such as "length," "width," "up," "down," "front," "rear," "left," "right," "vertical," "horizontal," "top," "bottom," "inside," and "outside" are based on orientation or position relationships shown in the accompanying drawings and are merely for ease of description of the embodiments of the present disclosure and simplification of the description, rather than indicating or implying that the apparatuses or elements referred to must have a specific orientation or be constructed and operated in a specific orientation, and therefore cannot be construed as limiting the present disclosure.

In addition, the terms "first" and "second" are merely used for the purpose of illustration, and cannot be construed as indicating or implying relative importance or implicitly indicating the number of technical features indicated. Thus, the features defined with "first" and "second" may explicitly or implicitly include one or more features. In the description of the embodiments of the present disclosure, "a plurality of" means two or more, unless specifically defined otherwise.

In the embodiments of the present disclosure, unless expressly stated or limited otherwise, the terms such as "mounting," "connecting," "connection," and "fixing" should be interpreted broadly, for example, they may be a fixed or detachable connection, or integration; may be a mechanical connection or an electrical connection; or may be a direct connection or an indirect connection by means of an intermediate medium, or may be communication between interiors of two elements or interaction between the two elements. For those of ordinary skill in the art, the specific meaning of the terms mentioned above in the embodiments of the present disclosure should be construed according to specific circumstances.

The above description is only the preferred embodiments of the present disclosure and is not intended to limit the present disclosure. Any modifications, equivalent substitutions, improvements, etc. made within the spirit and principles of the present disclosure shall fall within the scope of protection of the present disclosure.

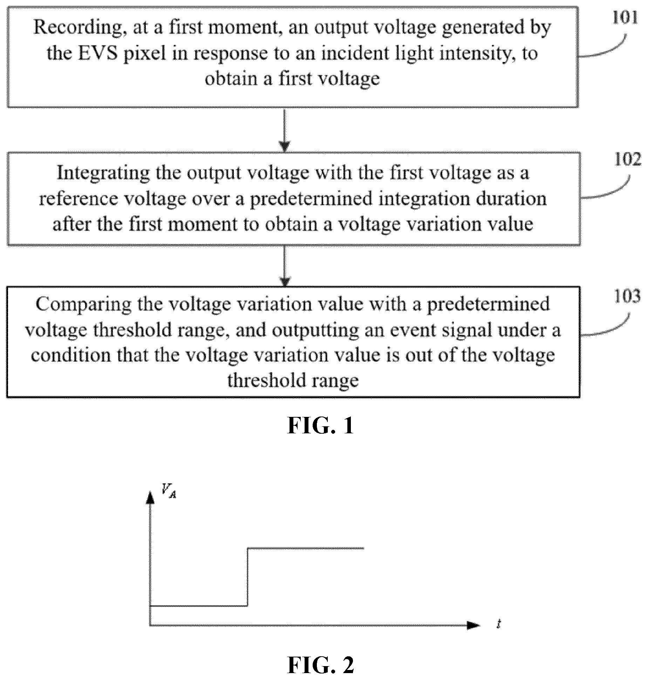

In order to solve the problem that the accuracy of outputting an event signal by an EVS vision sensor provided in the related art is poor, a first embodiment of the present disclosure provides an EVS pixel operating method, applied to an EVS pixel. An EVS vision sensor includes an array of pixels composed of a plurality of EVS pixels. FIG. 1 is a basic schematic flowchart of the EVS pixel operating method according to this embodiment. The EVS pixel operating method includes the following steps:

Step 101: Recording, at a first moment, an output voltage generated by the EVS pixel in response to an incident light intensity, to obtain a first voltage.

Specifically, in this embodiment, each EVS pixel in the array of EVS pixels is an integral circuit. In the integral circuit, a photodiode may be integrated with a capacitor that accumulates electric charges, so that the photodiode generates an electrical signal in response to an incident light intensity. The electrical signal includes a current signal or a voltage signal, and under a condition that the electrical signal is a current signal, a current/voltage conversion unit further converts a photocurrent into a logarithmic voltage, that is, the unit converts the current signal into a voltage signal.

Step 102: Integrating the output voltage with the first voltage as a reference voltage over a predetermined integration duration after the first moment to obtain a voltage variation value.

Specifically, in the related art, a voltage variation value is usually obtained by directly subtracting a voltage at a next moment from a voltage sampled at a current moment, and numerical precision of the voltage variation value is usually limited. Therefore, this embodiment uses an integration method to obtain an amplified voltage variation value, so as to improve the numerical precision of the voltage variation value.

In an optional implementation of this embodiment, before the step of integrating the output voltage with the first voltage as a reference voltage over a predetermined integration duration after the first moment to obtain a voltage variation value, the method further includes: obtaining an image quality requirement indicator of the EVS vision sensor; and setting the integration duration based on the image quality requirement indicator.

Specifically, the integration duration in this embodiment may be set according to actual use requirements, and the image quality requirement indicator includes at least one of: an image output frame rate, an image resolution, and the like. In practical applications, longer integration duration indicates a longer time taken to output a single frame of event image, leads to a lower image output frame rate, and at the same time, leads to richer image details of the event image obtained, that is, leads to a higher resolution. It can be seen that the integration duration is negatively correlated with the image output frame rate, and the integration duration is positively correlated with the image resolution. In this embodiment, the integration duration is flexibly set, so that different image quality requirements and response speed requirements can be effectively ensured.

In an optional implementation of this embodiment, the step of integrating the output voltage with the first voltage as a reference voltage over a predetermined integration duration after the first moment to obtain a voltage variation value includes: integrating, using a first predetermined integration calculation formula, the output voltage with the first voltage as the reference voltage over the predetermined integration duration after the first moment to obtain the voltage variation value.

It should be noted that an operational amplifier is provided in the integration unit that performs an integrating operation, and when currents at input and output terminals of the operational amplifier are equal, the following formula is met:

$$\frac{V_A - V_1}{R} = C\frac{d(V_1 - V_{out})}{dt}$$

Further, the first integration calculation formula below can be inferred from the foregoing formula:

$$V_{out} = V_1 - \frac{1}{RC}\int_{t1}^{t2}(V_A(t) - V_1)dt$$ ,

where $V_{out}$ represents the voltage variation value, $V_A(t)$ represents the output voltage at a moment $t$, $V_1$ represents the first voltage, $t1$ represents the first moment, $t2$ represents a second moment that is reached after the integration duration has elapsed since the first moment, and $R$ and $C$ are time constants.

In another optional implementation of this embodiment, the step of integrating the output voltage with the first voltage as a reference voltage over a predetermined integration duration after the first moment to obtain a voltage variation value includes: under a condition that the first voltage is a step signal of a second voltage, integrating, using a second predetermined integration calculation formula, the output voltage with the first voltage as the reference voltage over the predetermined integration duration after the first moment to obtain the voltage variation value. FIG. 2 is a schematic diagram of a step signal according to this embodiment. The step signal indicates that the output voltage at the first moment is a step signal with an amplitude of $V_2$.

Specifically, the second integration calculation formula is expressed as:

$$V_{out} = V_1 - (V_2 - V_1)\Delta t/RC,$$

where $V_{our}$ represents the voltage variation value, $V_1$ represents the first voltage, $V_2$ represents the second voltage at a moment $t2$, $t1$ represents the first moment, $t2$ represents a second moment that is reached after the integration duration has elapsed since the first moment, $R$ and $C$ are time constants, $\Delta t$ represents the integration duration, and $\Delta t = t2 - t1$.

Further, in an optional implementation of this embodiment, the EVS pixel operating method further includes: collecting statistics on an event signal generation rate of the EVS pixel per unit duration prior to a current moment; and under a condition that the event signal generation rate is out of a predetermined generation rate threshold range, correspondingly adjusting the time constants based on the event signal generation rate.

Specifically, the event signal generation rate in this embodiment is a level of an amount of events output by the EVS pixel for specific duration. In this embodiment, because an integration parameter being set improperly may cause a voltage variation to be magnified insufficiently or excessively large, the accuracy of the output event signal is still not ensured. In consideration of this, a past event signal output level is evaluated in real time to determine whether an event signal output behavior is normal. If not, the time constants $R$ and/or $C$ of the integration model described above are adjusted, to correct the integrating operation to ensure the accurate event signal output.

Step 103: Comparing the voltage variation value with a predetermined voltage threshold range, and outputting an event signal under a condition that the voltage variation value is out of the voltage threshold range.

Specifically, in this embodiment, an event signal for each EVS pixel is a binary vector (namely, a 2-bit vector), and the 2-bit vector is used to represent whether an incident light becomes stronger or weaker. It should be noted that the voltage threshold range in this embodiment is defined by a first voltage threshold and a second voltage threshold, the first voltage threshold is greater than 0, and the second voltage threshold is less than 0. Preferably, the first voltage threshold and the second voltage threshold may be the additive inverse of each other. For example, the first voltage threshold is 0.1 V, then the second voltage threshold is -0.1 V, and the voltage threshold range defined by the two thresholds is [-0.1, 0.1]. In practical applications, cases in which the voltage variation value is out of the voltage threshold range include the following two cases: Under a condition that the voltage variation value is greater than the first voltage threshold, it indicates that the vision sensor detects that light intensity becomes higher, a 2-bit vector [1, 0] is output, that is, an UP event signal is output. Under a condition that the voltage variation value is less than the second voltage threshold, it indicates that the vision sensor detects that light intensity becomes lower, a 2-bit vector [0, 1] is output, that is, a DN event signal is output.

In an optional implementation of this embodiment, after the step of comparing the voltage variation value with a predetermined voltage threshold range, the method further includes: under a condition that the voltage variation value is within the voltage threshold range, collecting statistics on an event signal generation rate of the EVS pixel per unit duration prior to a current moment; and updating the reference voltage under a condition that the event signal generation rate is less than a first predetermined generation rate threshold.

Specifically, in practical applications, under a condition that an event signal is output at the second moment that is reached after the integration duration has elapsed since the first moment, the reference voltage needs to be updated. For example, the reference voltage is updated to an output voltage at the second moment, that is, the recorded first voltage is updated to the second voltage. Under a condition that no event signal is output at the second moment, the reference voltage may not be updated. However, if there is a case in which an EVS pixel cannot generate an event signal for a long time in a practical application scenario, a normal output of an event image cannot be ensured. In this scenario, in this embodiment, when it is determined based on a statistics collection result of the event signal generation rate that there is no generation of event signal for a long period of time, the reference voltage may be actively updated to adjust the voltage variation value for threshold comparison during subsequent sensor operation, and the sensitivity of the EVS pixel to a light intensity change is dynamically increased to increase the event signal generation rate. In addition, it should also be noted that, in practical applications, in addition to the above-described manner of updating the reference voltage, in this embodiment, the event signal generation rate may also be improved by updating the voltage threshold range, and this embodiment is not uniquely limited to this.

In another optional implementation of this embodiment, after the step of outputting an event signal under a condition that the voltage variation value is out of the voltage threshold range, the method further includes: collecting statistics on an event signal generation rate of the EVS pixel per unit duration prior to a current moment; and updating the reference voltage under a condition that the event signal generation rate is greater than a second predetermined generation rate threshold.

Specifically, in practical applications, data generated by the EVS vision sensor is an asynchronous stream of events rather than a frame stream of conventional images. Although the stream of events has the advantage of high time resolution, slow or even erroneous readout of an event camera may occur due to errors in data transmission or data overload in the stream of events. Therefore, in one solution, under a condition that an event generation rate is large for a past duration such that data overload is likely to occur, the reference voltage may also be updated to dynamically adjust the sensitivity of the EVS pixel to a light intensity change to filter out low frequency signals, and a subsequent event generation rate per unit time is limited to control bandwidth.

Based on the above technical solutions of the embodiment of the present disclosure, the output voltage generated by the EVS pixel in response to the incident light intensity is recorded at the first moment to obtain the first voltage; the output voltage is integrated with the first voltage as the reference voltage over the predetermined integration duration after the first moment to obtain the voltage variation value; and the voltage variation value is compared with the predetermined voltage threshold range, and the event signal is output under a condition that the voltage variation value is out of the voltage threshold range. In the implementation of the solutions of the present disclosure, a voltage variation value generated by an EVS pixel in response to a light intensity change is integrated over a specific duration, so as to amplify the voltage variation value, to more clearly indicate whether a voltage variation is a positive increase or a reverse reduction, which can effectively ensure the accuracy of outputting an event signal by an EVS vision sensor.

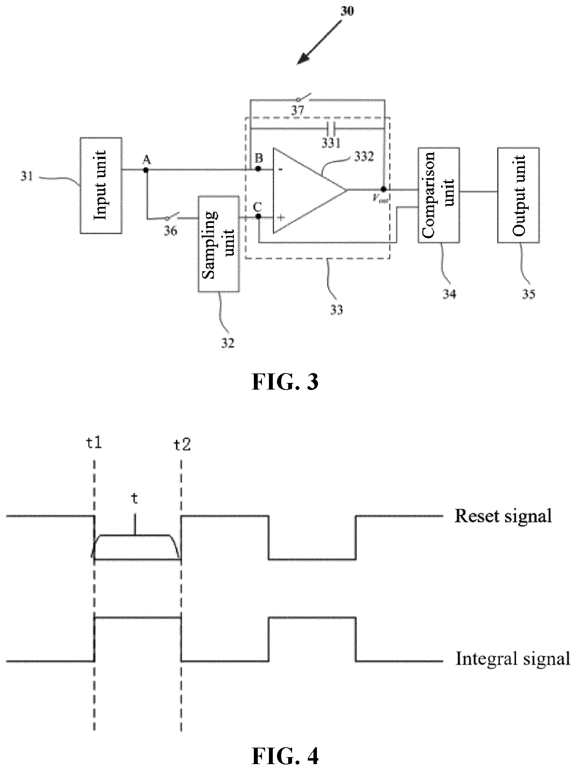

FIG. 3 is a schematic diagram of a structure of an EVS pixel according to a second embodiment of the present disclosure. The EVS pixel can be used to implement the EVS pixel operating method in the foregoing embodiment. As shown in FIG. 3, the EVS pixel 30 mainly includes: an input unit 31, a sampling unit 32, an integration unit 33, a comparison unit 34, and an output unit 35, where

the input unit 31 is configured to generate an output voltage in response to an incident light intensity;

the sampling unit 32 is configured to record the output voltage at a first moment as a first voltage;

the integration unit 33 is configured to integrate the output voltage with the first voltage as a reference voltage over a predetermined integration duration after the first moment to obtain a voltage variation value;

the comparison unit 34 is configured to compare the voltage variation value with a predetermined voltage threshold range; and

the output unit 35 is configured to output an event signal under a condition that the voltage variation value is out of the voltage threshold range.

Specifically, in this embodiment, the input unit includes a photoelectric conversion device, which may be a photodiode, a phototransistor, a clamp photodiode, or any other similar device, and the input unit may further include a current/voltage conversion unit configured to convert a photocurrent corresponding to an incident light into a logarithmic voltage. A sampling capacitor is provided in the sampling unit, and the sampling unit samples an output voltage generated by the input unit at a previous moment and stores the output voltage in the sampling capacitor. In addition, the EVS pixel may further include a voltage buffer, and the voltage buffer is separately connected to the input unit and the integration unit, and is configured to transmit a voltage of the input unit to the integration unit.

Referring to FIG. 3 again, in an optional implementation of this embodiment, a first switch 36 is provided between the input unit 31 and the sampling unit 32, the integration unit 33 includes a feedback capacitor 331 and an operational amplifier 332, the operational amplifier includes a first input terminal, a second input terminal, and an output terminal, the first input terminal is connected to the input unit 31, the second input terminal is connected to the sampling unit 32, the output terminal is connected to the comparison unit 34, a second switch 37 is provided between the first input terminal and the output terminal, and the comparison unit 34 is connected to the output unit 35. Before the first moment, the first switch 36 and the second switch 37 are both in a closed state. At the first moment, the first switch 36 enters an open state. After the first moment, the second switch 37 enters an open state, and upon arrival of the integration duration, the second switch 37 enters a closed state.

Specifically, it is assumed that before a moment $t1$, both the first switch and the second switch are closed, the feedback capacitor is short-circuited, and the integration unit is in a reset state. At the moment $t1$, a pixel performs sampling. Assuming that photoelectric conversion of an incident light forms a voltage of $V_1$ at a point A, that is, $V_A = V_1$, the first switch is open, and the voltage $V_1$ is stored in the sampling unit. The second switch is then open, the integration unit starts integrating $V_A$. The amplification of the operational amplifier 332 is large enough such that a virtual short occurs at the input terminals, and points B and C each have a voltage $V_1$. At a moment $t2$, a voltage corresponding to an incident light is $V_2$, that is, $V_A = V_2$. The second switch is closed, and the integration unit stops integrating and is reset. The integration unit compares the integral voltage $V_{out}$ with the predetermined voltage threshold range and outputs an event based on a comparison result. A conventional EVS vision sensor typically compares the comparison result directly with a set threshold, thereby outputting an event signal (that is, an UP event or a DN event). This method may result in an output event that is not precise enough due to limited numerical precision of the comparison result. In this embodiment, the original comparison result is integrated by using the second switch, and an integration time may be set according to needs. Because the integration may enlarge the comparison result, this improves the precision of the output event.

In this embodiment, because currents at the left and right ends of the operational amplifier 332 are equal, the following formula can be met:

$$\frac{V_A - V_1}{R} = C\frac{d(V_1 - V_{out})}{dt}$$

Further, the first integration calculation formula below can be inferred from the foregoing formula:

$$V_{out} = V_1 - \frac{1}{RC}\int_{t1}^{t2}(V_A(t) - V_1)dt$$

Under a condition that the output voltage at the first moment is a step signal with an amplitude of $V_2$, the first integration calculation formula may then be converted into a second integration calculation formula:

$$V_{out} = V_1 - (V_2 - V_1)\Delta t/RC,$$

where $V_{out}$ represents the voltage variation value, $V_A(t)$ represents the output voltage at a moment $t$, $V_1$ represents the first voltage, $V_2$ represents the second voltage at a moment $t2$, $t1$ represents the first moment, $t2$ represents a second moment that is reached after the integration duration has elapsed since the first moment, $R$ and $C$ are time constants, $\Delta t$ represents the integration duration, and $\Delta t = t2 - t1$.

FIG. 4 is a schematic diagram of a signal change according to this embodiment. At the moment $t1$, the EVS pixel performs sampling. It is assumed that a voltage corresponding to an incident light is $V_1$, an output voltage of the output unit is denoted as $V_A$, $V_A = V_1$, the first switch is open, and the voltage $V_1$ is stored in the sampling unit. The second switch is then open, the integration unit starts integrating $V_A$. The amplification of the operational amplifier is large enough such that a virtual short occurs at the input terminals, and $V^+ = V^- = V_1$ (that is, points B and C each have a voltage $V_1$). At the moment $t2$, a voltage corresponding to an incident light is $V_2$, and $V_A = V_2$. The second switch is closed, and the integration unit stops integrating and is reset. An integration time is $t$ (that is, $t2$-$t1$). $V_{out}$ is output according to the first integration calculation formula, $V_{out}$ is compared with a predetermined threshold by using a comparator, and a corresponding event signal is output based on a comparison result. Under a condition that $V_A(t) > V_1$, that is, $V_{out} < V_1$, an UP event is output. Under a condition that $V_A(t) < V_1$, that is, $V_{out} > V_1$, a DN event is output. It may be known from the second integration calculation formula, under a condition that $V_2 > V_1$, that is, $V_{out} < V_1$, an UP event is output. Under a condition that $V_2 < V_1$, that is, $V_{out} > V_1$, a DN event is output. It may be understood that after the integration time t, the second switch is closed, a voltage of the feedback capacitor is reset, an amount of the voltage variation at a next moment continues to be integrated, and a time for each integration may be set according to needs.

It should be noted that the EVS pixel operating method in the first embodiment may be implemented based on the EVS pixel provided in this embodiment. Those of ordinary skill in the art can clearly understand that, for the convenience and brevity of the description, references can be made to the corresponding process in the foregoing method embodiment for the specific working process of the EVS pixel described in this embodiment, and details are not described herein again.

According to the EVS pixel provided in this embodiment, the output voltage generated by the EVS pixel in response to the incident light intensity is recorded at the first moment to obtain the first voltage; the output voltage is integrated with the first voltage as the reference voltage over the predetermined integration duration after the first moment to obtain the voltage variation value; and the voltage variation value is compared with the predetermined voltage threshold range, and the event signal is output under a condition that the voltage variation value is out of the voltage threshold range. In the implementation of the solutions of the present disclosure, a voltage variation value generated by an EVS pixel in response to a light intensity change is integrated over a specific duration, so as to amplify the voltage variation value, to more clearly indicate whether a voltage variation is a positive increase or a reverse reduction, which can effectively ensure the accuracy of outputting an event signal by an EVS vision sensor.

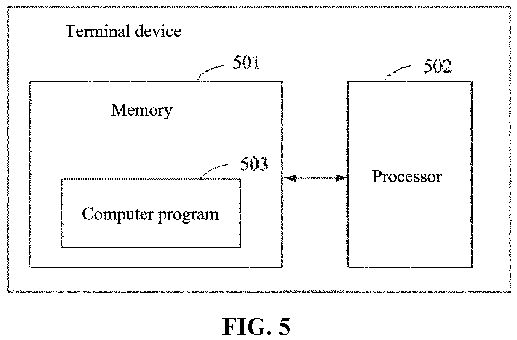

FIG. 5 shows a terminal device according to a third embodiment of the present disclosure. The terminal device can be used to implement the EVS pixel operating method in the foregoing embodiment, and mainly includes: a memory 501, a processor 502, and a computer program 503 stored on the memory 501 and executable on the processor 502. The memory 501 and the processor 502 are communicatively connected. The processor 502, when executing the computer program 503, implements the method in Embodiment 1. There may be one or more processors.

The memory 501 may be a random access memory (RAM) or a non-volatile memory, such as a disk memory. The memory 501 is configured to store executable program code, and the processor 502 is coupled to the memory 501.

Further, the embodiments of the present disclosure further provide a computer-readable storage medium, the computer-readable storage medium may be provided in an electronic apparatus in each of the foregoing embodiments, and the computer-readable storage medium may be a memory in the foregoing embodiment of FIG. 5.

The computer-readable storage medium has stored thereon a computer program. The program, when executed by a processor, implements the EVS pixel operating method in the foregoing embodiment. Further, the computer-readable storage medium may further be a USB flash drive, a removable hard disk, a read-only memory (ROM), a RAM, a magnetic disk, an optical disc, or other various media that can store program code.

In the several embodiments provided in the present disclosure, it should be understood that the disclosed apparatus and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings, direct couplings, or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, and may be located at one position, or may be distributed on a plurality of network modules. Some or all of the modules may be selected according to actual needs to achieve the objectives of the solutions of the embodiments.

In addition, functional modules in the embodiments of the present disclosure may be integrated into one processing module, or each of the modules may exist alone physically, or two or more modules may be integrated into one module. The integrated module may be implemented in the form of hardware, or may be implemented in the form of software functional modules.

Under a condition that the integrated module is implemented in the form of software functional modules and sold or used as independent products, the module may be stored in a computer-readable storage medium. Based on such understanding, the technical solutions of the present disclosure, in essence or the contribution to the prior art, or all or some of the technical solutions may be embodied in the form of a software product. The computer software product is stored in a readable storage medium, and includes a plurality of instructions used to cause a computer device (which may be a personal computer, a server, a network device, etc.) to perform all or some of the steps of the method described in various embodiments of the present disclosure. Moreover, the foregoing readable storage medium includes a USB flash drive, a removable hard disk, a ROM, a RAM, a magnetic disk, an optical disc, or other various media that can store program code.

It should be noted that for ease of description, the foregoing method embodiments are described as a series of action combinations. However, those skilled in the art should understand that the present disclosure is not limited to the order of actions described, because some steps may be performed in another order or simultaneously according to the present disclosure. Moreover, those skilled in the art should also understand that the embodiments described in this specification are all preferred embodiments, and the involved actions and modules are not necessarily required in the present disclosure.

In the foregoing embodiments, the embodiments are described with different emphases, and for a part which is not detailed in an embodiment, references can be made to the related description of the other embodiments.

The EVS pixel operating method and the related apparatus provided in the present disclosure are described above. For those skilled in the art, changes may be made to the specific implementations and application range based on the idea of the present disclosure. In conclusion, the content of this specification should not be construed as a limitation to the present disclosure

**Claims**

1. An EVS pixel operating method, applied to an EVS pixel, wherein the EVS pixel operating method comprises:

   recording, at a first moment, an output voltage generated by the EVS pixel in response to an incident light intensity, to obtain a first voltage;
   integrating the output voltage with the first voltage as a reference voltage over a predetermined integration duration after the first moment to obtain a voltage variation value;
   comparing the voltage variation value with a predetermined voltage threshold range, and outputting an event signal under a condition that the voltage variation value is out of the voltage threshold range.

2. The EVS pixel operating method according to claim 1, wherein the step of integrating the output voltage with the first voltage as a reference voltage over a predetermined integration duration after the first moment to obtain a voltage variation value comprises:

   integrating, using a first predetermined integration calculation formula, the output voltage with the first voltage as the reference voltage over the predetermined integration duration after the first moment to obtain the voltage variation value, wherein the first integration calculation formula is expressed as:

$$V_{out} = V_1 - \frac{1}{RC}\int_{t1}^{t2}(V_A(t) - V_1)dt$$ ;

wherein $V_{out}$ represents the voltage variation value, $V_A(t)$ represents the output voltage at a moment $t$, $V_1$ represents the first voltage, $t1$ represents the first moment, $t2$ represents a second moment that is reached after the integration duration has elapsed since the first moment, and $R$ and $C$ are time constants.

3. The EVS pixel operating method according to claim 1, wherein the step of integrating the output voltage with the first voltage as a reference voltage over a predetermined integration duration after the first moment to obtain a voltage variation value comprises:

under a condition that the first voltage is a step signal of a second voltage, integrating, using a second predetermined integration calculation formula, the output voltage with the first voltage as the reference voltage over the predetermined integration duration after the first moment to obtain the voltage variation value, wherein the second integration calculation formula is expressed as:

$$V_{out} = V_1 - (V_2 - V_1)\Delta t/RC,$$

wherein $V_{out}$ represents the voltage variation value, $V_1$ represents the first voltage, $V_2$ represents the second voltage at a moment $t2$, $t1$ represents the first moment, $t2$ represents a second moment that is reached after the integration duration has elapsed since the first moment, $R$ and $C$ are time constants, and $\Delta t$ represents the integration duration.

4. The EVS pixel operating method according to claim 1, wherein before the step of integrating the output voltage with the first voltage as a reference voltage over a predetermined integration duration after the first moment to obtain a voltage variation value, the method further comprises:

obtaining an image quality requirement indicator of the EVS vision sensor;
setting the integration duration based on the image quality requirement indicator.

5. The EVS pixel operating method according to claim 2 or 3, wherein the method further comprises:

collecting statistics on an event signal generation rate of the EVS pixel per unit duration prior to a current moment; and
under a condition that the event signal generation rate is out of a predetermined generation rate threshold range, correspondingly adjusting the time constants based on the event signal generation rate.

6. The EVS pixel operating method according to any one of claims 1 to 4, wherein after the step of comparing the voltage variation value with a predetermined voltage threshold range, the method further comprises:

under a condition that the voltage variation value is within the voltage threshold range, collecting statistics on an event signal generation rate of the EVS pixel per unit duration prior to a current moment; and
updating the reference voltage under a condition that the event signal generation rate is less than a first predetermined generation rate threshold.

7. The EVS pixel operating method according to any one of claims 1 to 4, wherein after the step of outputting an event signal under a condition that the voltage variation value is out of the voltage threshold range, the method further comprises:

collecting statistics on an event signal generation rate of the EVS pixel per unit duration prior to a current moment; and
updating the reference voltage under a condition that the event signal generation rate is greater than a second predetermined generation rate threshold.

8. An EVS pixel, comprising: an input unit, a sampling unit, an integration unit, a comparison unit, and an output unit, wherein

the input unit is configured to generate an output voltage in response to an incident light intensity; the sampling unit is configured to record the output voltage at a first moment as a first voltage;
the integration unit is configured to integrate the output voltage with the first voltage as a reference voltage over a predetermined integration duration after the first moment to obtain a voltage variation value;
the comparison unit is configured to compare the voltage variation value with a predetermined voltage threshold range; and
the output unit is configured to output an event signal under a condition that the voltage variation value is out of the voltage threshold range.

9. The EVS pixel according to claim 8, wherein a first switch is provided between the input unit and the sampling unit, the integration unit comprises a first input terminal, a second input terminal, and an output terminal, the first input terminal is connected to the input unit, the second input terminal is connected to the sampling unit, the output terminal is connected to the comparison unit, a second switch is provided between the first input terminal and the output terminal, and the comparison unit is connected to the output unit, wherein
before the first moment, the first switch and the second switch are both in a closed state; at the first moment, the first switch enters an open state; and after the first moment, the second switch enters an open state, and upon arrival of the integration duration, the second switch enters a closed state.

10. A terminal device, comprising a memory and a processor, wherein

the processor is configured to execute a computer program stored on the memory;
the processor, when executing the computer program, implements steps of the method according to any one of claims 1 to 7.

11. A computer-readable storage medium having stored thereon a computer program, wherein the computer program, when executed by a processor, implements steps of the method according to any one of claims 1 to 7.

Recording, at a first moment, an output voltage generated by the EVS pixel in response to an incident light intensity, to obtain a first voltage | 101

Integrating the output voltage with the first voltage as a reference voltage over a predetermined integration duration after the first moment to obtain a voltage variation value | 102

Comparing the voltage variation value with a predetermined voltage threshold range, and outputting an event signal under a condition that the voltage variation value is out of the voltage threshold range | 103

**FIG. 1**

**FIG. 2**

**FIG. 3**

**FIG. 4**

Terminal device

Memory — 501

Computer program — 503

Processor — 502

**FIG. 5**

## INTERNATIONAL SEARCH REPORT

| International application No. |
| --- |
| **PCT/CN2022/104983** |

**A. CLASSIFICATION OF SUBJECT MATTER**

H04N 5/235(2006.01)i

According to International Patent Classification (IPC) or to both national classification and IPC

**B. FIELDS SEARCHED**

Minimum documentation searched (classification system followed by classification symbols)

H04N5

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, CNKI: 事件, 动态视觉, 传感器, 电压, 积分, 求积, EVS, event based vision sensor, DVS, dynamic vision sensor, voltage, integral

**C. DOCUMENTS CONSIDERED TO BE RELEVANT**

| Category* | Citation of document, with indication, where appropriate, of the relevant passages | Relevant to claim No. |
| --- | --- | --- |
| X | CN 110971792 A (HUAWEI TECHNOLOGIES CO., LTD.) 07 April 2020 (2020-04-07) description, paragraphs 0003-0102, and figures 1-17 | 1, 4, 6-11 |
| A | CN 110971792 A (HUAWEI TECHNOLOGIES CO., LTD.) 07 April 2020 (2020-04-07) description, paragraphs 0003-0102, and figures 1-17 | 2, 3, 5 |
| PX | CN 114500868 A (SHENZHEN ANEUVISUAL INTELLIGENT CORE SCIENCE AND TECHNOLOGY CO., LTD.) 13 May 2022 (2022-05-13) description, paragraphs 0015-0042 | 1-11 |
| A | CN 113812142 A (INSIGHTNESS AG) 17 December 2021 (2021-12-17) entire document | 1-11 |
| A | CN 111770245 A (CHANGCHUN INSTITUTE OF OPTICS, FINE MECHANICS AND PHYSICS, CHINESE ACADEMY OF SCIENCES) 13 October 2020 (2020-10-13) entire document | 1-11 |
| A | US 2010182468 A1 (ARC AUSTRIAN RESEARCH CENTERS GMBH) 22 July 2010 (2010-07-22) entire document | 1-11 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 November 2022** | **30 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104983**

| Patent document cited in search report | | | Publication date (day/month/year) | Patent family member(s) | | | Publication date (day/month/year) |
|---|---|---|---|---|---|---|---|
| CN | 110971792 | A | 07 April 2020 | EP | 3849168 | A1 | 14 July 2021 |
| | | | | US | 2021218913 | A1 | 15 July 2021 |
| | | | | WO | 2020063332 | A1 | 02 April 2020 |
| CN | 114500868 | A | 13 May 2022 | None | | | |
| CN | 113812142 | A | 17 December 2021 | WO | 2020229980 | A1 | 19 November 2020 |
| | | | | KR | 20220006082 | A | 14 January 2022 |
| | | | | EP | 3967028 | A1 | 16 March 2022 |
| | | | | US | 2022224856 | A1 | 14 July 2022 |
| CN | 111770245 | A | 13 October 2020 | None | | | |
| US | 2010182468 | A1 | 22 July 2010 | JP | 2010510732 | A | 02 April 2010 |
| | | | | DK | 2098062 | T3 | 24 April 2017 |
| | | | | EP | 2098062 | A1 | 09 September 2009 |
| | | | | ES | 2621194 | T3 | 03 July 2017 |
| | | | | WO | 2008061268 | A1 | 29 May 2008 |
| | | | | AT | 504582 | A1 | 15 June 2008 |

Form PCT/ISA/210 (patent family annex) (January 2015)